# FASCICULE DE BREVET EUROPEEN

(11) **EP 2 681 422 B1**
(45) Date de publication et mention de la délivrance du brevet: **03.06.2015**
(21) Numéro de dépôt: 12709932.3
(22) Date de dépôt: 17.02.2012
(51) Int. Cl.: F01N 3/10, F01N 11/00, F01N 13/00, F01N 9/00, F01N 3/20

(54) **PROCEDE DE DIAGNOSTIC D'UN CATALYSEUR D'OXYDATION PAR MESURE DU TAUX D'OXYDES D'AZOTE EN AVAL D'UN ORGANE DE REDUCTION CATALYTIQUE SELECTIVE**
VERFAHREN ZUR DURCHFÜHRUNG EINER DIAGNOSE BEI EINEM OXIDATIONSKATALYSATOR DURCH MESSUNG DER STICKOXIDKONZENTRATION NACH EINEM SELEKTIVEN KATALYTISCHEN REDUKTIONSELEMENT
METHOD FOR RUNNING DIAGNOSTICS ON AN OXIDATION CATALYST BY MEASURING THE LEVEL OF NITROGEN OXIDES DOWNSTREAM OF A SELECTIVE CATALYTIC REDUCTION MEMBER

(30) Priorité: 02.03.2011 FR 1151676; 02.03.2011 FR 1151675
(43) Date de publication de la demande: 08.01.2014
(73) Titulaire: Peugeot Citroën Automobiles SA, 78140 Vélizy Villacoublay (FR)
(72) Inventeur: LEONARDON, Mathilde, F-75015 Paris (FR); DERENNE, Magali, F-76300 Sotteville Les Rouen (FR); LE TALLEC, Thomas, F-92800 Puteaux (FR); MAESSE, Pierre Henri, F-92500 Rueil Malmaison (FR); CHAILLOU, Christophe, F-78180 Montigny Le Bretonneux (FR)
(74) Mandataire: Renous Chan, Véronique
(86) Numéro de dépôt international: PCT/FR2012/050350
(87) Numéro de publication internationale: WO 2012/117183

(56) Documents cités:
- WO-A1-2010/113269

## Description

La présente invention concerne un procédé de diagnostic d'un catalyseur d'oxydation dans une ligne d'échappement de gaz issus d'un moteur à combustion interne. L'invention concerne aussi un véhicule automobile comprenant une ligne d'échappement et un calculateur mettant en oeuvre le procédé précédent.

Dans le domaine de l'industrie automobile, la réduction de la consommation de carburant et la diminution de l'émission de polluants émis à l'échappement sont des problèmes majeurs.

Ainsi, les monoxydes de carbone (abrégé en CO) et les hydrocarbures (abrégé en HC) constituent des polluants dont on cherche à réduire l'émission dans l'atmosphère. Pour la réduction de ces polluants, il est connu d'utiliser un catalyseur d'oxydation. Un tel catalyseur d'oxydation est également connu sous le terme abrégé CatOx ou sous l'expression anglaise *Diesel Oxydation Catalyst* abrégée en *DOC.* Dans la suite du document l'abréviation "DOC" et le terme "catalyseur d'oxydation" sont indifféremment utilisés.

En outre, le monoxyde d'azote (NO), le dioxyde d'azote (NO₂) et le protoxyde d'azote (N₂O) sont d'autres gaz polluants généralement connus sous le nom de NOₓ. Il est remarquable que le DOC ne contribue pas à la diminution globale de l'émission des NOₓ car le DOC, de par ses caractéristiques d'oxydant, catalyse la réaction de formation de dioxydes d'azote à partir de monoxyde d'azote. Ainsi le DOC contribue à l'augmentation du ratio de dioxydes d'azote par oxydes d'azote, noté ratio NO₂/NOₓ dans la suite du document.

Il est alors d'autant plus utile de prévoir un organe spécifique de dépollution du dioxyde d'azote et de tous les oxydes d'azote en particulier. Les moyens typiquement utilisés pour l'élimination de ces gaz sont des organes de réduction catalytique sélective (de l'anglais *Selective Catalytic Reduction* abrégé en SCR) associés à une injection d'urée ou de NH₃. Dans la suite de ce document, l'abréviation "SCR" et le terme "réduction catalytique sélective" sont indifféremment utilisés.

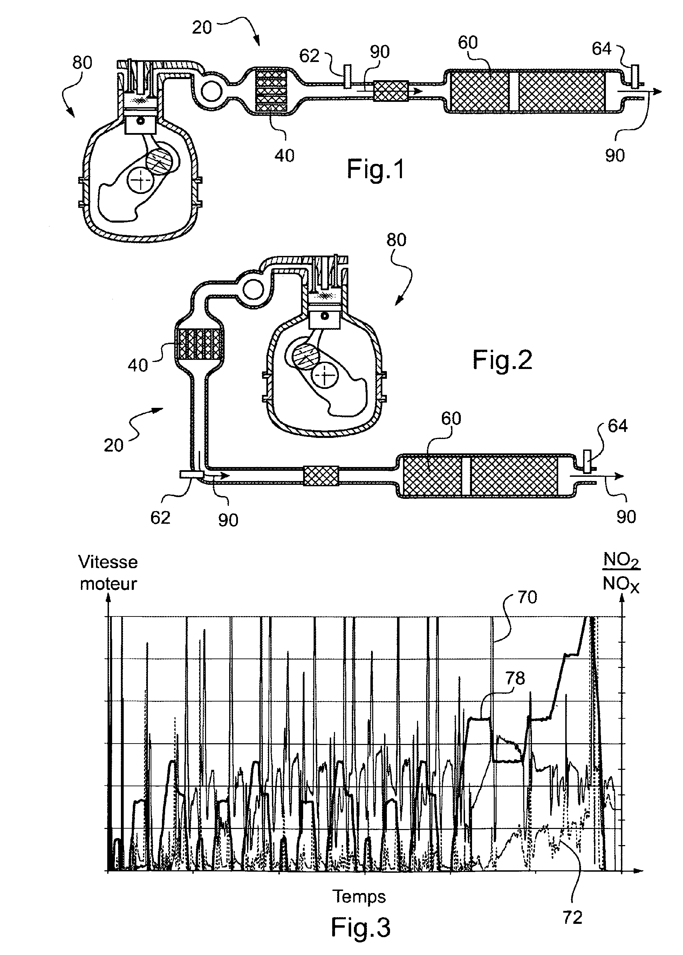

Ainsi le DOC et l'organe de SCR sont classiquement intégrés dans une ligne d'échappement de gaz issus d'un moteur à combustion interne. Les figures 1 et 2 montrent des exemples de lignes d'échappement 20 associées au moteur à combustion interne 80. Ces lignes d'échappement 20 peuvent comprendre le DOC 40 et l'organe de SCR 60 dans cet ordre selon le sens de l'échappement des gaz 90.

Pour s'assurer de l'efficacité dans le temps des organes de dépollution présents dans la ligne d'échappement 20, différents procédés de diagnostic de défaillance de ces organes ont été proposés. Il est, par exemple, connu d'utiliser des sondes de température pour déterminer un exotherme du DOC. Il est encore connu d'utiliser des capteurs du taux de dioxygène pour déterminer la modification de la consommation de dioxygène par le DOC. La détermination d'un exotherme ou la détermination d'une modification de la consommation de dioxygène permet de diagnostiquer une défaillance du DOC. Alternativement, les documents WO2008/093616 A, WO2009/101728 A et DE 10328856 A décrivent des procédés de diagnostic de la défaillance du DOC par la mesure du taux de NOₓ à la sortie du DOC, et éventuellement en amont du DOC. Ainsi chaque procédé de diagnostic connu propose l'utilisation de capteur spécifique à la détection de la défaillance du DOC. L'utilisation de capteur spécifique entraîne l'obtention de ligne d'échappement plus complexe et donc notamment plus coûteuse.

Un premier type de procédés se base sur la modélisation des paramètres de fonctionnement de la ligne d'échappement pour diagnostiquer une défaillance de la ligne d'échappement. Ainsi le document WO2010/113269 A propose un calcul estimatif du taux de NO₂ dans la ligne d'échappement pour déterminer une défaillance de la ligne. Ce premier type de procédés ne déterminant pas les valeurs réelles des paramètres de fonctionnement de la ligne d'échappement, la fiabilité de tels procédés est perfectible.

Un deuxième type de procédés se base sur la mesure des valeurs réelles des paramètres de fonctionnement de la ligne d'échappement. Les documents WO2008/093616 A, WO2009/101728 A et DE 10328856 A décrivent par exemple des procédés de diagnostic de la défaillance du DOC par la mesure du taux de NOₓ à la sortie du DOC, et éventuellement en amont du DOC. Ainsi ces procédés de diagnostic du deuxième type proposent l'utilisation de capteur spécifique à la détection de la défaillance du DOC. L'utilisation de capteur spécifique entraîne alors l'obtention de ligne d'échappement plus complexe et donc notamment plus coûteuse.

Il existe donc un besoin pour un procédé fiable de diagnostic de défaillance d'un organe de dépollution dans une ligne d'échappement, la ligne d'échappement restant de conception simple, et, notamment pour un procédé de diagnostic d'un catalyseur d'oxydation susceptible d'être mis en oeuvre sur une ligne d'échappement plus simple.

Pour cela l'invention propose un procédé de diagnostic d'un catalyseur d'oxydation dans une ligne d'échappement de gaz issus d'un moteur à combustion interne, la ligne d'échappement comprenant un organe de réduction catalytique sélective en aval du catalyseur d'oxydation selon le sens d'échappement des gaz, le procédé comprenant :
- la mesure du taux d'oxydes d'azote en aval de l'organe de réduction catalytique sélective selon le sens d'échappement des gaz ; et
- la détermination d'une défaillance du catalyseur d'oxydation en fonction du taux d'oxydes d'azote mesuré.

Selon une variante, la défaillance du catalyseur d'oxydation est déterminée lorsque le taux d'oxydes d'azote mesuré passe sous un seuil d'oxydes d'azote prédéterminé de défaillance du catalyseur d'oxydation.

Selon une variante, le procédé comprend, à partir du taux mesuré d'oxydes d'azote, le calcul du taux de conversion des oxydes d'azote par l'organe de réduction catalytique sélective ; la défaillance du catalyseur d'oxydation étant déterminée lorsque le taux de conversion de l'organe de réduction catalytique sélective passe sous un seuil de taux de conversion prédéterminé de défaillance du catalyseur d'oxydation.

Selon une variante, le procédé comprend :
- la mesure du taux de monoxyde de carbone ou du taux d'hydrocarbures en amont de l'organe de réduction catalytique sélective et en aval du catalyseur d'oxydation selon le sens d'échappement des gaz ; et
- la détermination d'une défaillance du catalyseur d'oxydation lorsque le taux mesuré de monoxyde de carbone ou d'hydrocarbures dépasse un seuil de monoxyde de carbone ou d'hydrocarbures prédéterminé de défaillance du catalyseur d'oxydation.

Selon une variante, le procédé comprend :
- la mesure du ratio de dioxydes d'azote par oxydes d'azote, en amont de l'organe de réduction catalytique sélective et en aval du catalyseur d'oxydation selon le sens d'échappement des gaz ; et
- la détermination d'une défaillance du catalyseur d'oxydation lorsque le ratio mesuré de dioxydes d'azote par oxydes d'azote passe sous un seuil de dioxydes d'azote par oxydes d'azote prédéterminé de défaillance du catalyseur d'oxydation.

Selon une variante, le procédé comprend :
- la mesure de la consommation de dioxygène par le catalyseur d'oxydation ; et
- la détermination d'une défaillance du catalyseur d'oxydation lorsque la consommation mesurée passe sous un seuil de consommation de dioxygène prédéterminé de défaillance du catalyseur d'oxydation.

Selon une variante, le procédé comprend :
- la mesure ou l'estimation de l'exotherme généré par le catalyseur d'oxydation ; et
- la détermination d'une défaillance du catalyseur d'oxydation en fonction de l'exotherme mesuré ou estimé.

Selon une variante, le procédé comprend en outre l'injection d'urée en amont de l'organe de réduction catalytique sélective selon le sens d'échappement des gaz.

Selon une variante, le moteur à combustion interne dont proviennent les gaz à échapper par la ligne d'échappement est un moteur diesel.

L'invention propose également, dans un mode de réalisation particulier du procédé précédant, un procédé de diagnostic de défaillance d'un organe dans une ligne d'échappement de gaz issus d'un moteur à combustion interne, la ligne d'échappement comprenant, selon le sens d'échappement des gaz, un catalyseur d'oxydation et un organe de réduction catalytique sélective, le procédé comprenant :
- les mesures à une première température et à une deuxième température du taux d'oxydes d'azote en aval de l'organe de réduction catalytique sélective selon le sens d'échappement des gaz, la deuxième température étant plus élevée que la première température ; et
- la détermination d'une défaillance du catalyseur d'oxydation lorsque :
   ∘ à la première température, le taux d'oxydes d'azote mesuré correspond à une insuffisance de fonctionnement de l'organe de réduction catalytique sélective ; et que
   ∘ à la deuxième température, le taux d'oxydes d'azote mesuré ne correspond pas à une insuffisance de fonctionnement de l'organe de réduction catalytique sélective.

Selon une variante, l'une au moins parmi les première et deuxième températures est une température mesurée au niveau de l'organe de réduction catalytique sélective.

Selon une variante, l'une au moins parmi les première et deuxième températures est une température estimée de l'organe de réduction catalytique sélective, l'estimation étant réalisée par un modèle de température de la ligne d'échappement.

Selon une variante, le modèle de température est basé sur l'un au moins des paramètres du groupe de paramètres consistant en :
- le régime du moteur ;
- le couple du moteur ;
- le débit de carburant du moteur ;
- le phasage de carburant du moteur ;
- le débit d'air du moteur ;
- le taux de recirculation dans le moteur des gaz à échapper dans la ligne d'échappement ;
- le vannage à l'admission du moteur ;
- la vitesse d'un véhicule comprenant le moteur et la ligne d'échappement ; et
- la position d'un turbocompresseur de l'admission du moteur récupérant l'énergie cinétique des gaz à échapper dans la ligne d'échappement.

Selon une variante, le procédé comprend la détermination d'une défaillance de l'organe de réduction catalytique sélective lorsque, à la première température et à la deuxième température les taux d'oxydes d'azote mesurés correspondent à une insuffisance de fonctionnement de l'organe de réduction catalytique sélective.

Selon une variante, à l'une au moins parmi les première et deuxième températures, le taux d'oxydes d'azote mesuré correspond à une insuffisance de fonctionnement de l'organe de réduction catalytique sélective lorsque le taux d'oxydes d'azote mesuré dépasse un seuil d'oxydes d'azote prédéterminé de défaillance.

Selon une variante, à l'une au moins parmi les première et deuxième températures, le procédé comprend le calcul du taux de conversion des oxydes d'azote par l'organe de réduction catalytique sélective à partir du taux d'oxydes d'azote mesuré, le taux d'oxydes d'azote mesuré à l'une au moins parmi les première et deuxième températures correspondant à une insuffisance de fonctionnement de l'organe de réduction catalytique sélective lorsque le taux de conversion des oxydes d'azote calculé passe sous un seuil de taux de conversion prédéterminé de défaillance.

Selon une variante :
la première température est une température de fonctionnement normal de la ligne d'échappement et est comprise entre 150°C et 300°C; et
la deuxième température est une température élevée de fonctionnement de la ligne d'échappement et est supérieure ou égale à 300°C.

Selon une variante s'appliquant à l'ensemble des modes de réalisation du procédé selon l'invention, le moteur à combustion interne dont proviennent les gaz à échapper dans la ligne d'échappement est un moteur diesel.

L'invention propose encore un véhicule automobile comprenant un moteur à combustion interne, une ligne d'échappement des gaz du moteur à combustion interne et un calculateur de diagnostic de la ligne d'échappement, la ligne d'échappement comprenant, dans le sens d'échappement des gaz, un catalyseur d'oxydation, un organe de réduction catalytique sélective, un capteur du taux d'oxydes d'azote ; et le calculateur mettant en oeuvre le procédé de diagnostic précédent selon tous modes de réalisation.

D'autres caractéristiques et avantages de l'invention apparaîtront à la lecture de la description détaillée qui suit des modes de réalisation de l'invention, donnés à titre d'exemple uniquement et en référence aux dessins qui montrent :
- figures 1 et 2, des représentations schématiques de lignes d'échappement associées à un moteur à combustion interne ;
- figure 3, un graphique comparant l'évolution du ratio de dioxydes d'azote par oxydes d'azote pour des catalyseurs d'oxydation neuf et ancien ;
- figure 4, un graphique de l'efficacité du traitement des oxydes d'azote par la ligne d'échappement de la figure 1 ou 2 en fonction de la température et du ratio de dioxydes d'azote par oxydes d'azote ;
- figure 5, un graphique représentant les émissions totales de polluants provenant de différents catalyseurs d'oxydation en fonction des différents seuils prédéterminés de défaillance de catalyseur d'oxydation.
- Figure 6, un histogramme de l'efficacité du traitement des oxydes d'azote par la ligne d'échappement de la figure 1 en fonction du ratio de dioxydes d'azote par oxydes d'azote à une première et une deuxième température ;
- Figure 7, un graphique comparant l'évolution de température pour des catalyseurs d'oxydation neuf et ancien.

Il est proposé un procédé de diagnostic d'un catalyseur d'oxydation. Le diagnostic est prévu pour être mis en oeuvre dans une ligne d'échappement pour les gaz issus d'un moteur à combustion interne. Le moteur à combustion interne est de préférence un moteur diesel. Il est fait référence aux figures 1 et 2 précédemment décrites pour illustrer la présence du DOC 40 dans la ligne d'échappement 20.

Conformément à ces figures 1 et 2, et selon un premier mode de réalisation, la ligne d'échappement 20, pour laquelle le procédé proposé est mis en oeuvre, comprend un organe de réduction catalytique sélective 60 en aval du DOC 20 selon le sens d'échappement des gaz. Dans la suite de ce document, les utilisations des termes "aval" et "amont" qualifient, dans la ligne d'échappement 20, le positionnement d'un dispositif par rapport à un autre dispositif selon le sens de l'échappement des gaz dans la ligne d'échappement 20.

Le procédé comprend la mesure du taux d'oxydes d'azote en aval de l'organe de SCR 60. Le procédé comprend en outre la détermination d'une défaillance du DOC 40.

En effet, parmi les défaillances connues du DOC 40, le vieillissement du DOC 40 a notamment pour conséquence une diminution d'efficacité de l'oxydation des HC et des CO et une diminution du ratio NO₂/NOₓ en aval du DOC 40. La figure 3 montre un graphique comparant l'évolution du ratio NO₂/NOₓ pour un DOC 40 à l'état neuf (courbe 70) et pour un DOC 40 à l'état ancien (courbe 72). L'évolution du ratio NO₂/NOₓ pour chaque DOC 40 est liée à un même profil de fonctionnement standard subit par le moteur à combustion interne 80. La figure 3 montre ainsi l'évolution de la vitesse du moteur 80, lorsque le moteur 80 subit le profil de fonctionnement standard (courbe 78).

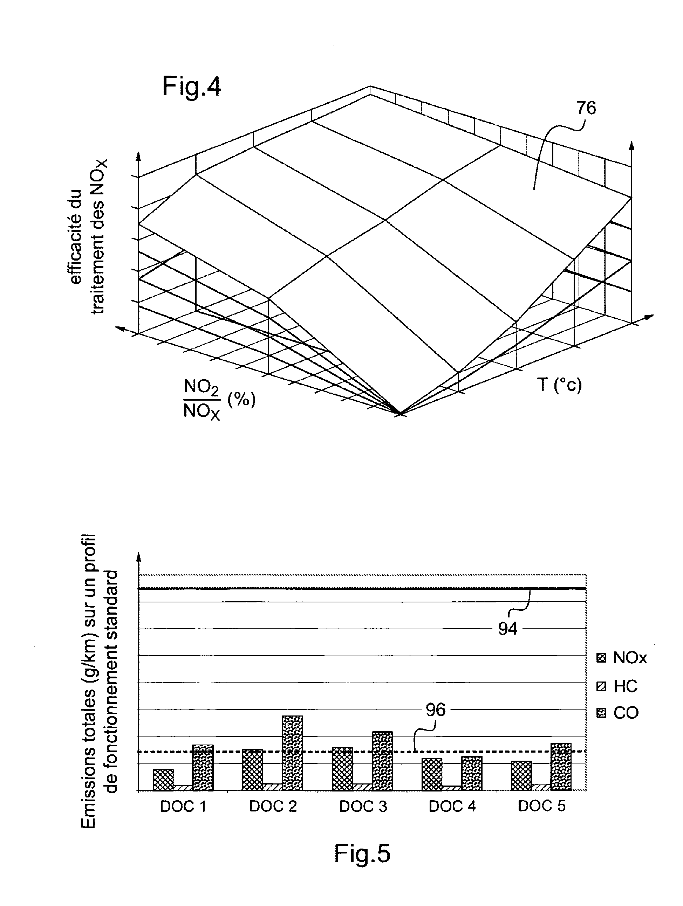

Or la diminution du ratio NO₂/NOₓ en aval du DOC 40 entraîne une augmentation des émissions de NOₓ en aval de l'organe de SCR 60, du fait d'une moins bonne efficacité de la SCR. Cette diminution de l'efficacité de la SCR est visible sur la nappe 76 la figure 4 qui représente un graphique de l'efficacité du traitement des NOₓ par la ligne d'échappement 80 en fonction du ratio NO₂/NOₓ.

Ainsi, de par la diminution de l'efficacité de la SCR par la baisse du ratio NO₂/NOₓ, il est possible de déterminer une diminution de l'activité du DOC 40 par la mesure du taux de NOₓ en aval de l'organe de SCR 60. On peut déterminer une défaillance du DOC 40 en fonction taux de NOₓ en aval de l'organe de SCR 60 selon au moins l'un des deux modes de détermination suivants.

La défaillance du DOC 40 peut par exemple être déterminée lorsque le taux de d'oxydes d'azote mesuré dépasse un seuil d'oxydes d'azote prédéterminé de défaillance du DOC 40.

La défaillance du DOC 40 peut encore être déterminée par l'intermédiaire d'un calcul du taux de conversion des NOₓ par l'organe de SCR 60. Le calcul du taux de conversion des NOₓ par l'organe de SCR 60 est effectué à partir du taux mesuré de NOₓ et d'un taux de NOₓ en amont de l'organe de SCR 60. Le taux de NOₓ en amont de l'organe de SCR 60 peut être obtenu à l'aide d'un capteur dédié ou à l'aide d'un modèle de taux de NOₓ en amont de l'organe de SCR 60. Le taux de NOₓ en amont de l'organe de SCR 60 est ainsi mesuré ou estimé, et permet, avec le taux de NOₓ mesuré en aval, le calcul du taux de conversion des NOₓ par l'organe de SCR 60. Lorsque le calcul du taux de conversion des NOₓ par l'organe de SCR 60 est effectué, la défaillance du DOC 40 est déterminée lorsque le taux de conversion calculé passe sous un seuil de taux de conversion prédéterminé de défaillance du DOC 40.

Les deux modes précédents de détermination d'une défaillance du DOC 40 peuvent être mis en oeuvre simultanément sur la ligne d'échappement 20.

En d'autres termes et dans tous les cas, le procédé proposé permet de diagnostiquer une défaillance du DOC 40 non pas directement via la diminution d'efficacité de traitement des HC et CO mais indirectement via les émissions de NOx en aval de l'organe de SCR 60.

Or, en référence aux figures 1 et 2, le capteur NOₓ 64 en aval du SCR est imposé par un calculateur embarqué de diagnostic de la diminution des NOₓ (non représenté). Le calculateur embarqué de diagnostic de la diminution des NOₓ est un calculateur de diagnostic embarqué, plus connu sous le nom de calculateur OBD (abréviation provenant de l'expression anglaise *on board diagnostics*).

La mise en oeuvre du procédé proposé par ce même calculateur embarqué ne génère pas de besoin d'un capteur supplémentaire, contrairement aux autres solutions connues comme le diagnostic du DOC 40 par exotherme du DOC 40 ou par la modification de la consommation d'oxygène du DOC 40. Sans besoin d'un capteur supplémentaire, la ligne d'échappement 20, pour laquelle le procédé de diagnostic proposé est appliqué, est alors plus simple.

En définitive, le procédé proposé de diagnostic de catalyseur d'oxydation est susceptible d'être mis en oeuvre sur une ligne d'échappement plus simple.

Le seuil de NOₓ prédéterminé de défaillance du DOC 40 peut correspondre à un seuil stocké dans le calculateur OBD. Ce seuil prédéterminé fait parti de seuils réglementaires des différents polluants HC, CO ou NOₓ.

La figure 5 montre un graphique représentant les émissions totales de polluants HC, CO ou NOₓ en fonction des différents seuils prédéterminés de défaillance du DOC 40. Le seuil 94 correspond au seuil de CO prédéterminé de défaillance du DOC 40. Le seuil 96 correspond au seuil de NOₓ et de HC non méthaniques (abrégé en NMHC) prédéterminé de défaillance du DOC 40. La figure 5 montre les émissions totales de polluants HC, CO ou NOₓ qui proviennent de catalyseurs d'oxydation de différentes technologies : DOC 1, DOC 2, DOC 3, DOC 4 et DOC 5, et auxquels le profil standard de fonctionnement a été appliqué. Pour chacun de ces DOC, le seuil 96 de NOₓ prédéterminé est dépassé avant le seuil 94 prédéterminé des CO et des HC non méthaniques. Le procédé de diagnostic proposé permet donc de détecter une défaillance du DOC 40 et de couvrir les surémissions des autres polluants réglementés tel que CO, pour différentes technologies de DOC.

Toujours pour des questions de fiabilité du procédé de détection, le procédé peut comprendre en outre la mesure du taux de CO ou du taux de HC en amont de l'organe de SCR 60 et en aval du DOC 40. Cette mesure lorsqu'elle dépasse le seuil de CO ou de HC prédéterminé de défaillance du DOC 40 permet avantageusement une détermination supplémentaire d'une défaillance du DOC 40. Selon ce mode de réalisation, la ligne d'échappement 20 peut alors être pourvue d'un capteur supplémentaire.

Dans un même but de fiabilité du procédé de diagnostic proposé, le procédé peut comprendre en outre la mesure du ratio NO₂/NOₓ en amont de l'organe de SCR 60 et en aval du DOC 40. Cette mesure lorsqu'elle passe sous le seuil de NO₂/NOₓ prédéterminé de défaillance du DOC 40 permet avantageusement une meilleure détermination d'une défaillance du DOC 40. Selon ce mode de réalisation, la ligne d'échappement 20 peut alors être pourvue d'un capteur supplémentaire.

Toujours dans ce but de fiabilité, le procédé peut comprendre en outre la mesure ou l'estimation du taux de conversion des NOₓ en NO₂ par le DOC 40. Cette mesure ou cette estimation, lorsqu'elle passe sous un seuil du taux de conversion caractéristique de la défaillance du DOC, permet avantageusement une meilleure détermination d'une défaillance du DOC 40. Selon ce mode de réalisation, la ligne d'échappement 20 peut alors être pourvue d'un capteur supplémentaire.

Encore dans ce but de fiabilité, le procédé peut comprendre en outre la mesure de la consommation de O₂ par le DOC 40. Cette mesure, lorsqu'elle passe sous un seuil de consommation de O₂ prédéterminé de défaillance du DOC 40, permet avantageusement une meilleure détermination d'une défaillance du DOC 40. Selon ce mode de réalisation, la ligne d'échappement 20 peut alors être pourvue d'un capteur supplémentaire.

Encore dans ce but de fiabilité, le procédé peut comprendre en outre la mesure ou l'estimation de l'exotherme du DOC 40. Cette mesure ou estimation, lorsqu'elle n'est pas conforme à un seuil prédéterminé de défaillance du DOC 40, permet avantageusement une meilleure détermination d'une défaillance du DOC 40. La non-conformité de l'exotherme par rapport à un seuil prédéterminé de défaillance peut correspondre à la diminution de l'exotherme du DOC 40 du fait de son vieillissement. Ainsi une meilleure détermination de la défaillance du DOC 40 est possible lorsque l'exotherme mesuré ou estimé du DOC 40 passe sous un seuil de température prédéterminé de défaillance du DOC 40. La non-conformité de l'exotherme par rapport à un seuil prédéterminé de défaillance peut aussi correspondre à la diminution de la montée en température du DOC 40 lors d'une mise en fonctionnement de la ligne d'échappement 20. Ainsi une meilleure détermination de la défaillance du DOC 40 est possible lorsque la vitesse de montée en température du DOC 40 passe sous un seuil de montée en température prédéterminé de défaillance du DOC 40. Selon si l'exotherme est mesuré ou estimé, la ligne d'échappement 20 peut être pourvue d'un capteur supplémentaire.

En référence aux figures 1 et 2, la ligne d'échappement 20 peut comprendre un injecteur 62 d'urée en amont de l'organe de SCR 60. Ainsi le procédé proposé peut aussi comprendre l'injection d'urée en amont de l'organe de SCR 60. L'urée correspond à un réducteur de SCR également connue sous le nom d'AUS32.

L'invention se rapporte aussi à un véhicule automobile. Le véhicule automobile comprend alors le moteur à combustion interne 80, la ligne d'échappement 20 des gaz du moteur à combustion interne 80 et le calculateur de diagnostic de la ligne d'échappement 20 précédemment décrits. En référence aux figures 1 et 2, la ligne d'échappement 20 comprend aussi un capteur 64 du taux de NOₓ. Le calculateur met avantageusement en oeuvre le procédé de diagnostic précédemment décrit. La mise en oeuvre du procédé de diagnostic précédent pour la ligne d'échappement 20 est possible alors que la ligne d'échappement 20 peut ne pas comprendre de capteur entre le DOC 40 et l'organe de SCR 60.

Le procédé proposé comprend avantageusement la signalisation de la défaillance du DOC 40. Cette signalisation est alors destinée à l'utilisateur du véhicule comprenant la ligne d'échappement 20 ou à l'utilisateur du moteur à combustion interne 80.

Un autre mode de réalisation du procédé selon l'invention est décrit ci-dessous au vu des figures 1, 3, 4, 6 et 7, les caractéristiques communes aux deux variantes n'étant pas ici répétées par soucis de concision : Il est proposé un procédé de diagnostic de défaillance d'un organe dans une ligne d'échappement. Le diagnostic est prévu pour être mis en oeuvre dans une ligne d'échappement pour les gaz issus d'un moteur à combustion interne. Le moteur à combustion interne est de préférence un moteur diesel. Il est fait référence à la figure 1 précédemment décrite pour illustrer la présence d'un DOC 40 et un organe de réduction catalytique sélective 60 dans la ligne d'échappement 20.

Le procédé comprend des mesures du taux d'oxydes d'azote en aval de l'organe de SCR 60. Ces mesures du taux de NOₓ sont mise en oeuvre à une première température T1 et à une deuxième température T2. T2 est plus élevée que T1. En effet, T1 peut correspondre à une température faible ou moyenne de fonctionnement de la ligne d'échappement 20 alors que T2 peut correspondre à une température élevée de fonctionnement de la ligne d'échappement 20. T1 correspond alors de préférence à une température comprise entre 150°C et 300°C alors que T2 correspond de préférence à une température supérieure ou égale à 300 °C.

Le procédé comprend en outre la détermination d'une défaillance du DOC 40.

Ainsi, de par la diminution de l'efficacité de la SCR par la baisse du ratio NO₂/NOₓ à température faible et moyenne, il est possible de déterminer une défaillance dans la ligne d'échappement par la mesure du taux de NOₓ en aval de l'organe de SCR 60 à la température T1.

Cependant, il peut être utile de discriminer, parmi le DOC 40 et l'organe de SCR 60, quel est l'organe défaillant.

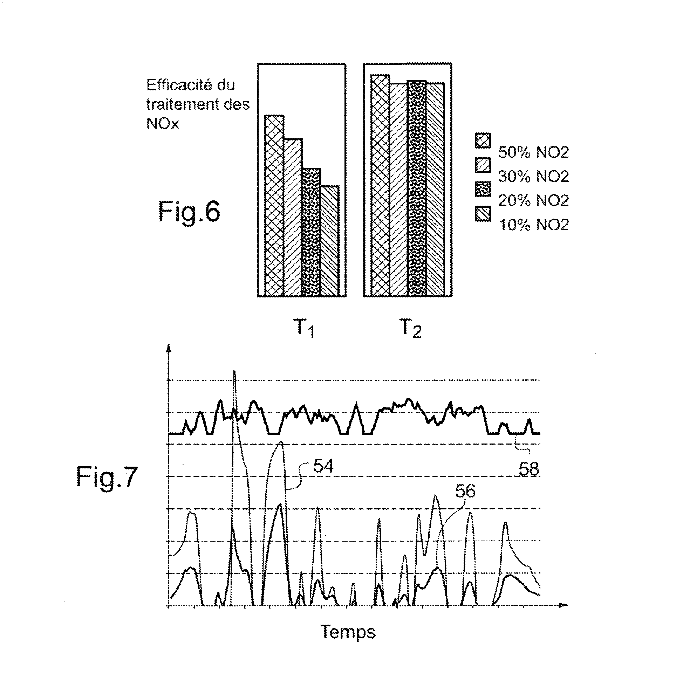

Dans le cas où le DOC 40 est défaillant alors que la ligne d'échappement 20 est soumis à une température élevée, la diminution du ratio NO₂/NOₓ en aval du DOC 40 du fait de sa défaillance, n'entraîne pas une diminution significative de l'efficacité du traitement des NOₓ par l'organe SCR 60. En effet, selon la figure 3, la diminution de l'efficacité du traitement des NOₓ par l'organe SCR 60 est beaucoup plus faible pour une température élevée de l'organe de SCR 60 que pour les températures faible et moyenne de l'organe de SCR 60. La figure 6 montre un histogramme de l'efficacité du traitement des NOₓ en fonction du ratio NO₂/NOₓ à T1 et T2. Cet histogramme met aussi en évidence que la baisse d'efficacité du traitement des NOₓ en fonction du ratio NO₂/NOₓ n'est significative que à la température T1 et pas à la température T2. Ainsi aux températures usuelles (T1), l'efficacité de traitement des NOₓ par l'organe de SCR 60 est dépendante du ratio NO₂/NOₓ, tandis qu'elle ne l'est plus aux températures élevées (T2).

A l'inverse, dans le cas où l'organe de SCR est défaillant, l'efficacité du traitement des NOₓ diminue en aval de l'organe de SCR 60 quelle que soit la température de l'organe de SCR 60.

En d'autres termes, une défaillance du DOC peut être déterminé lorsque :
- à la première température T1, le taux de NOₓ mesuré correspond à une insuffisance de fonctionnement de l'organe de SCR 60 ; et que
- à la deuxième température T2, le taux de NOₓ mesuré ne correspond pas à une insuffisance de fonctionnement de l'organe de SCR 60.

Lorsque le taux de NOₓ mesuré ne correspond pas à une insuffisance de fonctionnement de l'organe de SCR 60, cela signifie que le taux de NOₓ mesuré correspond à un fonctionnement satisfaisant de l'organe de SCR 60, c'est-à-dire à un fonctionnement normal de l'organe de SCR 60.

On peut déterminer que les taux de NOₓ mesuré en aval de l'organe de SCR 60 correspondent ou ne correspondent pas à une insuffisance de fonctionnement de l'organe de SCR 60, selon au moins l'un des deux modes de détermination suivants.

A une température donnée, T1 ou T2, l'insuffisance de fonctionnement de l'organe de SCR 60 peut par exemple correspondre à un taux d'oxydes d'azote mesuré dépassant un seuil d'oxydes d'azote prédéterminé de défaillance. Le seuil d'oxydes d'azote prédéterminé de défaillance dépend de préférence de la température, T1 ou T2, de la mesure du taux de NOₓ avec laquelle le seuil est comparé.

A une température donnée, T1 ou T2, l'insuffisance de fonctionnement de l'organe de SCR 60 peut encore être identifiée par l'intermédiaire d'un calcul du taux de conversion des NOₓ par l'organe de SCR 60. Le calcul du taux de conversion des NOₓ par l'organe de SCR 60 est effectué à partir du taux mesuré de NOₓ et d'un taux de NOₓ en amont de l'organe de SCR 60. Le taux de NOₓ en amont de l'organe de SCR 60 peut être obtenu à l'aide d'un capteur dédié ou à l'aide d'un modèle de taux de NOₓ en amont de l'organe de SCR 60. Le taux de NOₓ en amont de l'organe de SCR 60 est ainsi mesuré ou estimé, et permet, avec le taux de NOₓ mesuré en aval, le calcul du taux de conversion des NOₓ par l'organe de SCR 60. Ainsi, une insuffisance de fonctionnement peut correspondre à un taux calculé de conversion des NOₓ passant sous un seuil de taux de conversion prédéterminé de défaillance. Le seuil de taux de conversion de défaillance dépend de préférence de la température, T1 ou T2, de la mesure du taux de NOₓ avec laquelle le taux de conversion est calculé.

Les deux modes précédents de correspondance entre le taux de NOₓ mesuré et l'insuffisance de fonctionnement de l'organe de SCR 60 peuvent être mis en oeuvre simultanément par le procédé proposé. Ainsi, à une température donnée, le taux de NOₓ mesuré peut ne pas correspondre à une insuffisance de fonctionnement de l'organe de SCR 60 lorsque :
- le seuil de taux de NOₓ prédéterminé de défaillance n'est pas dépassé par le taux de NOₓ mesuré ; et/ou
- le seuil de taux de conversion prédéterminée de défaillance ne dépasse pas le taux de conversion calculé à partir du taux de NOx mesuré.

En d'autres termes, le procédé proposé permet de diagnostiquer une défaillance du DOC 40 non pas directement via la diminution d'efficacité de traitement des HC et CO mais indirectement via les émissions de NOₓ en aval de l'organe de SCR 60.

Or, en référence à la figure 1, un capteur NOₓ 64 en aval du SCR est imposé par un calculateur embarqué de diagnostic de la diminution des NOₓ (non représenté). Le calculateur embarqué de diagnostic de la diminution des NOₓ est un calculateur de diagnostic embarqué, plus connu sous le nom de calculateur OBD (abréviation provenant de l'expression anglaise *on board diagnostics*).

La mise en oeuvre du procédé proposé par ce même calculateur embarqué ne génère pas de besoin d'un capteur supplémentaire, contrairement aux solutions connues. Sans besoin d'un capteur supplémentaire, la ligne d'échappement 20, pour laquelle le procédé de diagnostic proposé est appliqué, est alors plus simple.

De plus l'utilisation de mesure de NOₓ en aval de l'organe de SCR permet d'obtenir une plus grande fiabilité du procédé proposé par rapport au procédé de diagnostic basé sur un modèle estimatif du taux de NOₓ en aval de l'organe de SCR.

En définitive, l'invention permet l'obtention d'un procédé fiable de diagnostic de défaillance d'un organe de dépollution dans ligne d'échappement, la ligne d'échappement restant de conception simple.

L'invention se rapporte aussi à un véhicule automobile. Le véhicule automobile comprend alors le moteur à combustion interne 80, la ligne d'échappement 20 des gaz du moteur à combustion interne 80 et le calculateur de diagnostic de la ligne d'échappement 20, précédemment décrits. En référence à la figure 1, la ligne d'échappement 20 comprend aussi le capteur 64 du taux de NOₓ. Le calculateur met avantageusement en oeuvre le procédé de diagnostic précédemment décrit. La mise en oeuvre du procédé de diagnostic précédent pour la ligne d'échappement 20 est possible alors que la ligne d'échappement 20 peut ne pas comprendre de capteur, notamment pas de capteur de NOₓ, entre le DOC 40 et l'organe de SCR 60.

Les différentes mesures à T1 et T2 du taux de NOₓ peuvent être réalisées lors de différentes phases de fonctionnement de la ligne d'échappement 20 et du moteur 80. Ainsi lors d'une phase de fonctionnement à faible ou moyenne température, une première mesure du taux de NOₓ à T1 peut être mémorisée par le calculateur. La deuxième mesure du taux de NOₓ à T2 est, elle, effectuée lorsque la ligne d'échappement 20 et le moteur 80 sont dans une phase de fonctionnement à température élevée.

Lorsque la ligne d'échappement 20 comprend au moins une sonde de température (non représentée), les déterminations des phases de fonctionnement à température faible ou moyenne et à température élevée peuvent être effectuées par mesure. Au moins l'une des températures T1 et T2 correspond alors à une température mesurée par la sonde de température. Il est préféré que la sonde de température soit présente dans la ligne d'échappement 20 pour la réalisation d'autres fonctions que le diagnostic de défaillance limitant ainsi les coûts de conception de la ligne d'échappement.

Lorsque la ligne d'échappement 20 est dépourvue de sonde de température au niveau de l'organe de SCR 60, au moins l'une des températures pour lesquelles les mesures du taux de NOₓ sont réalisées peut être estimée plutôt que mesurée. Ainsi T1 et/ou T2 correspondent alors à des températures estimées au moment de la réalisation de mesure du taux de NOₓ en aval de l'organe SCR 60. L'estimation est alors réalisée par un modèle de température de la ligne d'échappement 20. Le modèle de température utilisé est avantageusement basé sur l'un au moins des paramètres du groupe de paramètres consistant en :
- le régime du moteur 80 ;
- le couple du moteur 80 ;
- le débit de carburant du moteur 80 ;
- le phasage de carburant du moteur 80 ;
- le débit d'air du moteur 80,
- le taux de recirculation dans le moteur 80 des gaz 90 à échapper dans la ligne d'échappement 20 ;
- le vannage à l'admission du moteur 80 ;
- la vitesse du véhicule comprenant le moteur 80 et la ligne d'échappement 20 ; et
- la position d'un turbocompresseur de l'admission du moteur 80 récupérant l'énergie cinétique des gaz 90 à échapper dans la ligne d'échappement 20.

Un tel modèle de température est alors basé sur des paramètres au niveau du moteur 80 qui sont classiquement utilisés par d'autres fonctions que le diagnostic de défaillance de la ligne d'échappement 20. Ceci permet de réaliser une synergie, diminuant les coûts de conception et la complexité du moteur 80, de la ligne d'échappement 20 ainsi que du véhicule automobile qui les comprend. De plus, ce modèle de température permet de se passer de la présence d'un capteur de température spécifiquement prévu pour la mesure de la température de l'organe de SCR 60.

Le procédé proposé peut aussi permettre de déterminer la défaillance de l'organe de SCR 60 lorsque, à T1 et à T2, les taux d'oxydes d'azote mesurés correspondent tous les deux à une insuffisance de fonctionnement de l'organe de SCR. En effet, dans le cas où c'est l'organe de SCR 60 qui est défaillant, la diminution de l'efficacité du traitement des NOₓ par l'organe de SCR 60 est substantielle quelle que soit la température de l'organe de SCR 60.

En d'autres termes, la réalisation de la mesure du taux de NOₓ aux températures élevées (T2) où la SCR est indépendante du ratio NO₂/NOₓ, puis la correspondance ou non de cette mesure avec une insuffisance de fonctionnement de l'organe de SCR 60 permettent de lever l'incertitude. Si l'insuffisance de fonctionnement de l'organe de SCR 60 n'est plus déterminée aux températures élevées (T2), alors l'organe de SCR 60 fonctionne correctement et c'est donc le DOC 40 qui est en cause. Si l'insuffisance de fonctionnement de l'organe de SCR 60 est toujours déterminée aux températures élevées (T2), alors l'organe de SCR 60 est en cause. Ainsi la défaillance de l'organe de SCR 60 peut être déterminée lorsque les taux d'oxydes d'azote mesurés à T1 et à T2, dépassent chacun les seuils respectifs d'oxydes d'azote prédéterminé de défaillance à T1 ou T2. La défaillance de l'organe de SCR 60 peut aussi être déterminée lorsque les taux de conversion des NOₓ, calculés à partir des taux de NOₓ mesurés à T1 et à T2, passent chacun sous les seuils respectifs de taux de conversion prédéterminés de défaillance à T1 ou T2.

La distinction d'un défaut dû au DOC 40 ou dû à l'organe de SCR 60 permet de ne pas avoir à changer les deux organes en après-vente.

Le procédé proposé comprend avantageusement la signalisation de la défaillance du DOC 40 et/ou de l'organe de SCR 60. Cette signalisation est alors destinée à l'utilisateur du véhicule comprenant la ligne d'échappement 20 ou à l'utilisateur du moteur à combustion interne 80. La distinction d'un défaut dû au DOC 40 ou dû à l'organe de SCR 60 pouvant être réalisée sur le moteur en fonctionnement, la signalisation de l'origine de la défaillance peut être indiquée directement à l'utilisateur avant même le passage en après-vente.

Après la détermination d'une diminution de l'efficacité du traitement des NOₓ par mesure du taux de NOₓ aux températures usuelles (T1), il peut être envisagé d'améliorer la discrimination entre le DOC 40 et l'organe de SCR 60.

Ainsi dans le cas où deux sondes de températures en amont et en aval du DOC 40 sont présentes dans la ligne d'échappement 20, le procédé peut comprendre l'incrimination du DOC 40 via l'exotherme qu'il génère. En effet, lors du vieillissement du DOC 40 l'exotherme qu'il génère diminue. Cette diminution de l'exotherme est visible sur la figure 7 qui représente un graphique comparant l'évolution de la différence de température entre l'amont et l'aval du DOC 40 pour un DOC neuf (54) et un DOC ancien (56). Les courbes de différences de températures 54 et 56 sont obtenues lorsque le moteur 80 subit un profil de fonctionnement standard représenté par la courbe 58 correspondant à la vitesse du véhicule comprenant le moteur 80. L'incrimination du DOC 40 via l'exotherme qu'il génère est aussi possible en comparant la vitesse de montée en température du DOC 40 avec une vitesse de montée en température prédéterminée de référence. La vitesse de montée en température du DOC 40 diminue avec le vieillissement du DOC 40.

L'incrimination du DOC 40 par exotherme peut aussi être prévue dans le cas où une seule sonde de température est présente dans la ligne d'échappement 20. Dans ce cas, il est avantageux de se placer à un point de fonctionnement connu pour déterminer la diminution de l'exotherme du DOC 40.

Dans le cas où des sondes de températures sont par ailleurs présentes dans la ligne d'échappement 20, le procédé peut aussi comprendre l'incrimination du DOC 40 à l'aide de modèles de vieillissements du DOC 40. Un tel modèle consiste en l'enregistrement de la thermique vue par l'organe de SCR 60 et par le DOC 40 au cours de la vie du véhicule. Le défaut peut ainsi être attribué à l'organe dont le modèle de vieillissement est le plus atteint.

Ce procédé peut aussi comprendre l'incrimination du DOC 40 par l'intermédiaire de la consommation en O₂ du DOC 40. En effet, lors du vieillissement du DOC 40, sa consommation en oxygène utilisé pour traiter les polluants diminue. Une telle incrimination est possible lorsqu'une sonde d'O₂ est présente dans la ligne d'échappement 20 en amont du DOC 40. Cependant le capteur de NOₓ 64 peut également permettre de connaître la concentration en oxygène, notamment si l'on se place sur un point de fonctionnement connu.

## Revendications

1. Un procédé de diagnostic d'un catalyseur d'oxydation (40) dans une ligne d'échappement (20) de gaz (90) issus d'un moteur à combustion interne (80), la ligne d'échappement (20) comprenant un organe de réduction catalytique sélective (60) en aval du catalyseur d'oxydation (40) selon le sens d'échappement des gaz, le procédé étant **caractérisé en ce qu'**il comprend :
- la mesure du taux d'oxydes d'azote en aval de l'organe de réduction catalytique sélective (60) selon le sens d'échappement des gaz (90) par un unique capteur de NOx (64) disposé en aval de l'organe de réduction catalytique sélective ;
- la détermination d'une défaillance du catalyseur d'oxydation (40) en fonction du taux d'oxydes d'azote mesuré, la défaillance du catalyseur d'oxydation (40) étant déterminée lorsque le taux d'oxydes d'azote mesuré dépasse un seuil d'oxydes d'azote prédéterminé de défaillance du catalyseur d'oxydation (40), - la signalisation de la défaillance du catalyseur d'oxydation (40).

2. Le procédé de diagnostic selon la revendication 1, **caractérisé en ce qu'**il comprend, à partir du taux mesuré d'oxydes d'azote, le calcul du taux de conversion des oxydes d'azote par l'organe de réduction catalytique sélective (60) ; la défaillance du catalyseur d'oxydation (40) étant déterminée lorsque le taux de conversion de l'organe de réduction catalytique sélective (60) passe sous un seuil de taux de conversion prédéterminé de défaillance du catalyseur d'oxydation (40).

3. Le procédé de diagnostic selon l'une quelconque des revendications 1 à 2, **caractérisé en ce qu'**il comprend :
• la mesure du taux de monoxyde de carbone ou du taux d'hydrocarbures en amont de l'organe de réduction catalytique sélective (60) et en aval du catalyseur d'oxydation (40) selon le sens d'échappement des gaz (90) ; et
• la détermination d'une défaillance du catalyseur d'oxydation (40) lorsque le taux mesuré de monoxyde de carbone ou d'hydrocarbures dépasse un seuil de monoxyde de carbone ou d'hydrocarbures prédéterminé de défaillance du catalyseur d'oxydation (40).

4. Le procédé de diagnostic selon l'une quelconque des revendications précédentes, **caractérisé en ce qu'**il comprend :
• la mesure de la consommation de dioxygène par le catalyseur d'oxydation (40) ; et
• la détermination d'une défaillance du catalyseur d'oxydation (40) lorsque la consommation mesurée passe sous un seuil de consommation de dioxygène prédéterminé de défaillance du catalyseur d'oxydation (40).

5. Le procédé de diagnostic selon l'une quelconque des revendications précédentes, **caractérisé en ce qu'**il comprend :
• la mesure ou l'estimation de l'exotherme généré par le catalyseur d'oxydation (40) ; et
• la détermination d'une défaillance du catalyseur d'oxydation (40) en fonction de l'exotherme mesuré ou estimé.

6. Le procédé de diagnostic selon la revendication 1, **caractérisé en ce qu'**il comprend les mesures à une première température (T1) et à une deuxième température (T2) du taux d'oxydes d'azote en aval de l'organe de réduction catalytique sélective (60) selon le sens d'échappement des gaz (90), la deuxième température (T2) étant plus élevée que la première température (T1) ; et la détermination d'une défaillance du catalyseur d'oxydation (40) lorsque : - à la première température (T1), le taux d'oxydes d'azote mesuré correspond à une insuffisance de fonctionnement de l'organe de réduction catalytique sélective (60) ; et que - à la deuxième température (T2), le taux d'oxydes d'azote mesuré ne correspond pas à une insuffisance de fonctionnement de l'organe de réduction catalytique sélective (60).

7. Le procédé de diagnostic selon la revendication précédente, **caractérisé en ce que** l'une au moins parmi les première et deuxième températures (T1, T2) est une température mesurée au niveau de l'organe de réduction catalytique sélective (60).

8. Le procédé de diagnostic selon la revendication 6 ou 7, **caractérisé en ce que** l'une au moins parmi les première et deuxième températures (T1, T2) est une température estimée de l'organe de réduction catalytique sélective (60), l'estimation étant réalisée par un modèle de température de la ligne d'échappement (20).

9. Le procédé de diagnostic selon la revendication précédente, **caractérisé en ce que** le modèle de température est basé sur l'un au moins des paramètres du groupe de paramètres consistant en : le régime du moteur (80) ; le couple du moteur (80) ; le débit de carburant du moteur (80) ; le phasage de carburant du moteur (80) ; le débit d'air du moteur (80) ; le taux de recirculation dans le moteur (80) des gaz (90) à échapper dans la ligne d'échappement (20) ; le vannage à l'admission du moteur (80) ;la vitesse d'un véhicule comprenant le moteur (80) et la ligne d'échappement (20) ; et la position d'un turbocompresseur de l'admission du moteur (80) récupérant l'énergie cinétique des gaz (90) à échapper dans la ligne d'échappement (20).

10. Le procédé de diagnostic selon l'une quelconque des revendications 6 à 9, **caractérisé en ce qu'**il comprend la détermination d'une défaillance de l'organe de réduction catalytique sélective (60) lorsque, à la première température (T1) et à la deuxième température (T2), les taux d'oxydes d'azote mesurés correspondent à une insuffisance de fonctionnement de l'organe de réduction catalytique sélective (60).

11. Le procédé de diagnostic selon l'une quelconque des revendications 6 à 10, **caractérisé en ce que**, à l'une au moins parmi les première et deuxième températures (T1, T2), le taux d'oxydes d'azote mesuré correspond à une insuffisance de fonctionnement de l'organe de réduction catalytique sélective (60) lorsque le taux d'oxydes d'azote mesuré dépasse un seuil d'oxydes d'azote prédéterminé de défaillance.

12. Le procédé de diagnostic selon l'une quelconque des revendications 6 à 11, **caractérisé en ce que**, à l'une au moins parmi les première et deuxième températures (T1, T2), le procédé comprend le calcul du taux de conversion des oxydes d'azote par l'organe de réduction catalytique sélective (60) à partir du taux d'oxydes d'azote mesuré, le taux d'oxydes d'azote mesuré à l'une au moins parmi les première et deuxième températures (T1, T2) correspondant à une insuffisance de fonctionnement de l'organe de réduction catalytique sélective (60) lorsque le taux de conversion des oxydes d'azote calculé passe sous un seuil de taux de conversion prédéterminé de défaillance.

## Patentansprüche

1. Verfahren zur Diagnose eines Oxidationskatalysators (40) in einer Auspuffanlage (20) von Gasen (90) aus einem Verbrennungsmotor (80), wobei die Auspuffanlage (20) ein Organ zur selektiven katalytischen Reduktion (60) nachgelagert vom Oxydationskatalysator (40) gemäß der Auspuffrichtung der Gase umfasst, wobei das Verfahren **dadurch gekennzeichnet ist, dass** es Folgendes umfasst:
- die Messung des Stickoxidgehalte, nachgelagert vom Organ zur selektiven katalytischen Reduktion (60) gemäß der Auspuffrichtung der Gase (90) durch einen einzigen NOx-Sensor (64), der nachgelagert vom Organ zur selektiven katalytischen Reduktion angeordnet ist;
- die Bestimmung eines Defekts des Oxidationskatalysators (40) je nach dem gemessenen Stickoxidgehalt, wobei der Defekt des Oxidationskatalysators (40) bestimmt wird, wenn der gemessene Stickoxidgehalt eine vorbestimmte Stickoxidschwelle des Defekts des Oxidationskatalysators (40) übersteigt, - die Signalisierung des Defekts des Oxidationskatalysators (40).

2. Verfahren zur Diagnose nach Anspruch 1, **dadurch gekennzeichnet, dass** es, ausgehend vom gemessenen Stickoxidgehalt, die Berechung der Umwandlungsrate der Stickoxide durch das Organ zur selektiven katalytischen Reduktion (60) umfasst; wobei der Defekt des Oxidationskatalysators (40) bestimmt wird, wenn die Umwandlungsrate des Organ zur selektiven katalytischen Reduktion (60) eine vorbestimmte Umwandlungsratenschwelle des Defekts des Oxidationskatalysators (40) unterschreitet.

3. Verfahren zur Diagnose nach einem der Ansprüche 1 bis 2, **dadurch gekennzeichnet, dass** es Folgendes umfasst:
- die Messung des Kohlenmonoxydgehalts oder des Kohlenwasserstoffgehalts vorgelagert vom Organ zur selektiven katalytischen Reduktion (60) und nachgelagert vom Oxydationskatalysator (40) gemäß der Auspuffrichtung der Gase (90); und
- die Bestimmung eines Defekts des Oxidationskatalysators (40), wenn der gemessene Kohlenmonoxyd- oder Kohlenwasserstoffgehalt eine vorbestimmte Kohlenmonoxyd- oder Kohlenwasserstoffschwelle des Defekts des Oxidationskatalysators (40) übersteigt.

4. Verfahren zur Diagnose nach einem der vorhergehenden Ansprüche **dadurch gekennzeichnet, dass** es Folgendes umfasst:
- die Messung des Verbrauchs von Disauerstoff durch den Oxidationskatalysator (40); und
- die Bestimmung eines Defekts des Oxidationskatalysators (40), wenn der gemessene Verbrauch eine vorbestimmte Schwelle des Verbrauch von Disauerstoff des Defekts des Oxidationskatalysators (40) unterschreitet.

5. Verfahren zur Diagnose nach einem der vorhergehenden Ansprüche **dadurch gekennzeichnet, dass** es Folgendes umfasst:
- die Messung oder die Schätzung des Exotherms, das vom Oxydationskatalysator (40) erzeugt wird; und
- die Bestimmung eines Defekts des Oxidationskatalysators (40) je nach dem gemessenen oder geschätzten Exotherm.

6. Verfahren zur Diagnose nach Anspruch 1, **dadurch gekennzeichnet, dass** es die Messungen bei einer ersten Temperatur (T1) und bei einer zweiten Temperatur (T2) des Stickoxidgehalts nachgelagert vom Organ zur selektiven katalytischen Reduktion (60) gemäß der Auspuffrichtung der Gase (90) umfasst, wobei die zweite Temperatur (T2) höher als die erste Temperatur (T1) ist; und die Bestimmung eines Defekts des Oxidationskatalysators (40), wenn: - bei der ersten Temperatur (T1) der gemessene Stickoxydgehalt einer unzureichenden Funktion des Organs zur selektiven katalytischen Reduktion (60) entspricht, und dass - bei der zweiten Temperatur (T2), der gemessene Stickoxidgehalt nicht einer unzureichenden Funktion des Organs zur selektiven katalytischen Reduktion (60) entspricht.

7. Verfahren zur Diagnose nach dem vorhergehenden Anspruch, **dadurch gekennzeichnet, dass** mindestens eine der ersten und der zweiten Temperatur (T1, T2) eine Temperatur ist, die auf der Ebene des Organs zur selektiven katalytischen Reduktion (60) gemessen wird.

8. Verfahren zur Diagnose nach Anspruch 6 oder 7, **dadurch gekennzeichnet, dass** mindestens eine der ersten und der zweiten Temperatur (T1, T2) eine geschätzte Temperatur des Organs zur selektiven katalytischen Reduktion (60) ist, wobei die Schätzung durch ein Temperaturmodell der Auspuffanlage (20) durchgeführt wird.

9. Verfahren zur Diagnose nach dem vorhergehenden Anspruch, **dadurch gekennzeichnet, dass** das Temperaturmodell auf mindestens einem der Parameter der Gruppe von Parametern basiert, die aus Folgendem bestehen: der Drehzahl des Motors (80); dem Drehmoment des Motors (80); dem Brennstofffluss des Motors (80); der Phasierung des Brennstoffs des Motors (80); dem Luftstrom des Motors (80); die Rückführrate im Motor (80) der Abgase (90) in der Auspuffanlage (20); der Reinigung beim Einlass des Motors (80); der Geschwindigkeit eines Fahrzeugs (20), umfassend den Motor (80) und die Auspuffanlage, und der Position des Turboverdichters des Einlasses des Motors (80), der die kinetische Energie der Abgase (90) in der Auspuffanlage wiedergewinnt (20).

10. Verfahren nach einem der Ansprüche 6 bis 9, **dadurch gekennzeichnet, dass** es die Bestimmung eines Defekts des Organs zur selektiven katalytischen Reduktion (60) umfasst, wenn bei der ersten Temperatur (T1) und bei der zweiten Temperatur (T2) die gemessenen Stickoxidgehalte einer unzureichenden Funktion des Organs zur selektiven katalytischen Reduktion (60) entsprechen.

11. Verfahren zur Diagnose nach einem der Ansprüche 6 bis 10, **dadurch gekennzeichnet, dass** bei mindestens einer der ersten und der zweiten Temperatur (T1, T2) der gemessene Stickoxidgehalt einer unzureichenden Funktion des Organs zur selektiven katalytischen Reduktion (60) entspricht, wenn der gemessene Stickoxidgehalt eine vorbestimmte Stickoxidschwelle des Defekts übersteigt.

12. Verfahren nach einem der Ansprüche 6 bis 11, **dadurch gekennzeichnet, dass** bei mindestens einer der ersten und der zweiten Temperatur (T1, T2) das Verfahren die Berechung der Umwandlungsrate der Stickoxide durch das Organ zur selektiven katalytischen Reduktion (60) ausgehend vom gemessenen Stickoxidgehalt umfasst, wobei der gemessene Stickoxidgehalt bei mindestens einer der ersten und der zweiten Temperatur (T1, T2) einer unzureichenden Funktion des Organs zur selektiven katalytischen Reduktion (60) entspricht, wenn die berechnete Umwandlungsrate der Stickoxide eine vorbestimmte Umwandlungsratenschwelle des Defekts unterschreitet.

## Claims

1. Method for running diagnostics on an oxidation catalytic converter (40) in an exhaust line (20) for gases (90) emanating from an internal combustion engine (80), the exhaust line (20) comprising a selective catalytic reduction member (60) downstream from the oxidation catalytic converter (40) in the direction wherein the gases are exhausted, the method being **characterised in that** it comprises:
- measuring the level of nitrogen oxides downstream from the selective catalytic reduction member (60) in the direction wherein the gases (90) are exhausted via a single NOx sensor (64) arranged downstream from the selective catalytic reduction member;
- determining a fault of the oxidation catalytic converter (40) on the basis of the level of nitrogen oxides measured, the fault of the oxidation catalytic converter (40) being determined when the level of nitrogen oxides measured exceeds a predetermined nitrogen oxide fault threshold of the oxidation catalytic converter (40).

2. Method for running diagnostics according to claim 1, **characterised in that** it comprises, on the basis of the level of nitrogen oxides measured, calculating the nitrogen oxide conversion rate by the selective catalytic reduction member (60); the fault of the oxidation catalytic converter (40) being determined when the conversion rate of the selective catalytic conversion member (60) falls below a predetermined oxidation catalytic converter (40) conversion rate fault threshold.

3. Method for running diagnostics according to any of claims 1 to 2, **characterised in that** it comprises:
- measuring the level of carbon monoxide and the level of hydrocarbons upstream from the selective catalytic reduction member (60) and downstream from the oxidation catalytic converter (40) in the direction wherein the gases (90) are exhausted; and
- determining a fault of the oxidation catalytic converter (40) when the level of carbon monoxide or hydrocarbons measured exceeds a predetermined carbon monoxide or hydrocarbon fault threshold of the oxidation catalytic converter (40).

4. Method for running diagnostics according to any of the preceding claims, **characterised in that** it comprises:
- measuring the dioxygen consumption by the oxidation catalytic converter (40); and
- determining a fault of the oxidation catalytic converter (40) when the consumption measured exceeds a predetermined dioxygen consumption fault threshold of the oxidation catalytic converter (40).

5. Method for running diagnostics according to any of the preceding claims, **characterised in that** it comprises:
- measuring or estimating the exotherm generated by the oxidation catalytic converter (40); and
- determining a fault of the oxidation catalytic converter (40) on the basis of the exotherm measured or estimated.

6. Method for running diagnostics according to claim 1, **characterised in that** it comprises measurements at a first temperature (T1) and at a second temperature (T2) of the level of nitrogen oxides downstream from the selective catalytic reduction member (60) in the direction wherein the gases (90) are exhausted, the second temperature (T2) being higher than the first temperature (T1); and determining a fault of the oxidation catalytic converter (40) when:
- at the first temperature (T1), the level of nitrogen oxides measured corresponds to an operating defect of the selective catalytic reduction member (60).
- at the second temperature (T2), the level of nitrogen oxides measured does not correspond to an operating defect of the selective catalytic reduction member (60).

7. Method for running diagnostics according to the preceding claim, **characterised in that** at least one of the first and second temperatures (T1, T2) is a temperature measured at the selective catalytic reduction member (60).

8. Method for running diagnostics according to claim 6 or 7, **characterised in that** at least one of the first and second temperatures (T1, T2) is an estimated temperature of the selective catalytic reduction member (60), the estimation being carried out by means of an exhaust line (20) temperature model.

9. Method for running diagnostics according to the preceding claim, **characterised in that** the temperature model is based on at least one of the parameters of the group of parameters consisting in: the engine (80) speed; the engine (80) torque; the engine (80) fuel flow rate; the engine (80) fuel phasing; the engine (80) air flow rate; the recirculation rate in the engine (80) of the gases (90) to be exhausted in the exhaust line (20); the engine (80) intake valve regulation; the speed of a vehicle comprising the engine (80) and the exhaust line (20); and the position of an engine (80) intake turbo-charger recovering the kinetic energy of the gases (90) to be exhausted in the exhaust line (20).

10. Method for running diagnostics according to any one of claims 6 to 9, **characterised in that** it comprises determining a fault of the selective catalytic reduction member (60) when, at the first temperature (T1) and at the second temperature (T2), the levels of nitrogen oxides measured correspond to an operating defect of the selective catalytic reduction member (60).

11. Diagnostic method according to any one of claims 6 to 10, **characterised in that**, at one at least of the first and second temperatures (T1, T2), the level of nitrogen oxides measured corresponds to an operating defect of the selective catalytic reduction member (60) when the level of nitrogen oxides measured exceeds a predetermined nitrogen oxide fault threshold.

12. Method for running diagnostics according to any of claims 6 to 11, **characterised in that**, at one at least of the first and second temperatures (T1, T2), the method comprises calculating the nitrogen oxide conversion rate by the selective catalytic reduction member (60) on the basis of the level of nitrogen oxides measured, the level of nitrogen oxides measured at one at least of the first and second temperatures (T1, T2) corresponding to an operating defect of the selective catalytic reduction member (60) when the nitrogen oxide conversion rate calculated falls below a predetermined conversion rate fault threshold.
